# FASCICULE DE BREVET EUROPEEN

(11) **EP 2 906 469 B1**
(45) Date de publication et mention de la délivrance du brevet: **16.05.2018**
(21) Numéro de dépôt: 13774432.2
(22) Date de dépôt: 10.10.2013
(51) Int. Cl.: B64C 39/02

(54) **DRONE TÉLÉ-OPÉRÉ COMPORTANT UN MOYEN DE FIXATION À UNE SURFACE**
FERNGESTEUERTE DROHNE MIT VORRICHTUNG ZUR BEFESTIGUNG AUF EINER OBERFLÄCHE
REMOTE-OPERATED DRONE COMPRISING A MEANS OF ATTACHMENT TO A SURFACE

(30) Priorité: 12.10.2012 FR 1259781
(43) Date de publication de la demande: 19.08.2015
(73) Titulaire: Institut Supérieur de l'Aéronautique et de l'Espace, 31055 Toulouse Cedex 4 (FR)
(72) Inventeur: BERNARD, Dominique, F-31450 Montesquieu-Lauragais (FR)
(74) Mandataire: Ipside
(86) Numéro de dépôt international: PCT/EP2013/071183
(87) Numéro de publication internationale: WO 2014/057046

(56) Documents cités:
- EP-A1- 1 384 662
- EP-A2- 2 103 518
- US-A1- 2006 113 425
- US-A1- 2006 249 623
- US-B1- 7 318 564
- US-B1- 7 714 536

## Description

La présente invention relève du domaine des mini-véhicules aériens dits mini-drones ou micro-drones.

Elle concerne plus particulièrement un micro/nano véhicule aérien, capable d'effectuer aussi bien des vols d'avancement, (à la manière d'un avion), que des vols stationnaires (à la manière d'un hélicoptère).

### Art antérieur

Les micro-drones, c'est à dire des engins volants radiocommandés de quelques centaines de grammes de masse, pour une plus grande dimension de l'ordre de moins de vingt centimètres, sont de plus en plus fréquemment utilisés pour accéder à des endroits difficiles d'accès ou présentant un danger pour une intervention humaine directe.

Ils sont notamment utilisés pour réaliser une surveillance de zones sensibles, pour des missions télé-opérées ou autonome de surveillance ou de reconnaissance en milieu urbain par exemple. Ces missions peuvent être effectuées à l'extérieur et/ou à l'intérieur des bâtiments.

Ceci implique que le système doit être capable :
D'effectuer des vols d'avancement rapide en extérieur pour translater d'un point à un autre et résister à des rafales de vent ;
D'effectuer des vols stationnaires ou à faible vitesse à l'extérieur mais surtout à l'intérieur d'un bâtiment ;
De franchir sans risque des ouvertures de type portes ou fenêtres ouvertes pour entrer ou sortir des dits bâtiments.
tout en restant d'un coût unitaire très faible au regard d'autres moyens aériens. Les progrès de miniaturisation de l'électronique les rendent capables d'embarquer des caméras de quelques grammes ou d'autres senseurs adaptés à leur mission spécifique.

Généralement, les micro-drones destinés à un vol en extérieur sont de type « voilure fixe », tandis que ceux destinés à un vol en intérieur sont de type « voilure tournante ». On connaît notamment dans ce domaine des véhicules multi rotors dont les hélices (souvent au nombre de 4) sont horizontales, coplanaires et reliées à un corps central par des tiges rigides.

Des besoins multi-missions apparaissent aujourd'hui sans qu'aucune des configurations classiques ne se révèle globalement satisfaisante.

On connaît notamment des drones tel que décrits dans la demande de brevet FR 11 52585, de la demanderesse, mettant en oeuvre deux hélices contrarotatives, et capables de vol horizontal, hélices orientées à l'horizontal, ou de vols stationnaire, les hélices étant alors orientées vers le haut.

Les documents US 2006/0113425 et EP 1384662 divulguent des autres drones de l'art antérieur.

Ce type de drone est usuellement doté d'hélices alimentées par des batteries. Il est par ailleurs souhaité de rendre ces drones de plus en plus petits, pour leur permettre de se glisser par des passages étroits, ou pour améliorer leur discrétion, ce qui limite encore plus les dimensions de la batterie, et donc sa capacité. De ce fait, la durée des missions de ces drones est fréquemment limitée à quelques minutes, ce qui, comme on le comprend, restreint leur utilisation.

### Exposé de l'invention

La présente invention vise en premier lieu un véhicule aérien de type mini- ou micro-drone, de type télé-opéré, à voilure fixe, comportant des moyens de propulsion, le véhicule aérien comportant des moyens de fixation à un support sur lequel le véhicule ne se maintiendrait pas, sans motorisation, par la seule gravité, et des moyens de décrochage de ce support. Un tel véhicule aérien est défini dans la revendication 1. On entend ici par "se fixer" le fait de pouvoir demeurer en place, moteurs arrêtés. La fixation du véhicule aérien sur un support est réalisée par plaquage contre ce support, que ce soit, une paroi inclinée, verticale ou un plafond. Le plaquage contre une paroi permet de ne pas altérer la surface de la paroi que ce soit lorsque le véhicule aérien se fixe par plaquage ou se décroche de la paroi.

On nomme ici micro-drone un véhicule volant commandé à distance ou autonome, généralement d'une envergure de quelques dizaines de centimètres. La description qui suit s'applique également au cas de nano-drones, dont l'envergure est généralement inférieure à dix centimètres.

On désigne par "support sur lequel le véhicule ne se maintiendrait pas, sans motorisation, par la seule gravité" notamment une paroi inclinée, verticale ou un plafond.

La structure du drone tel qu'exposé lui permet de se rapprocher de différents types d'obstacles, (parois par exemple), jusqu'au contact avec ceux-ci, sans que cela n'affecte son intégrité globale. Le véhicule comporte un dispositif lui permettant de s'accrocher sur des surfaces lisses, notamment verticales (principalement des parois vitrées), mais également des plafonds. Dans ces conditions, la forte économie d'énergie consécutive à l'arrêt complet des moteurs, permet d'augmenter très sensiblement les temps d'observation.

Un avantage significatif de l'invention est de pouvoir fixer le drone en un endroit depuis lequel le « point de vue » est intéressant, et poursuivre l'observation pendant plusieurs dizaines de minutes (voire plusieurs heures) avec une consommation d'énergie très minime consécutive à l'arrêt des moyens de propulsion. A tout instant, l'appareil peut s'extraire de sa position pour un nouveau point d'observation.

Selon un mode de réalisation particulier, les moyens de fixation à un support comprennent une ventouse, disposée en périphérie du véhicule aérien. Cette disposition permet une fixation facile à un support de type paroi vitrée ou autre surface lisse.

Plus particulièrement, dans ce cas, la ventouse comporte au voisinage de son bord un ergot permettant l'accrochage d'un fil, les moyens de décrochage du support non horizontal comprenant un actionneur d'extraction pilotable à distance, fixé sur la structure du drone en face de cet ergot, permettant d'exercer une traction sur le fil et de provoquer le décollement de la ventouse de son support. De la sorte, le détachement de la ventouse de son support est rendu aisé.

Selon un mode de réalisation particulier, le véhicule aérien est une structure conformée en tronc de cône autour d'un axe longitudinal X, l'angle dudit cône étant compris entre 2° et 20°, le véhicule comportant - une voilure fixe constituée d'un ensemble d'ailes concourantes selon l'axe longitudinal X et - des gouvernes aérodynamiques mobiles disposées dans la partie arrière (la moins large) du véhicule.

Cette disposition permet au véhicule de se glisser facilement dans des ouvertures.

Plus particulièrement, dans ce cas, la voilure fixe comprend un premier groupe de quatre ailes, dites ailes avant selon l'axe longitudinal X, de forme et dimensions identiques, disposées en croix autour de l'axe longitudinal X, et un second groupe de quatre ailes dites ailes arrières, de forme et dimensions identiques, disposées en croix autour de l'axe longitudinal X, et les moyens de propulsion comprennent deux hélices contrarotatives, mobiles autour de l'axe longitudinal X, entrainées par deux moteurs électriques coaxiaux, les hélices étant montées en opposition, l'ensemble comprenant ces deux hélices étant disposé entre les deux groupes d'ailes avant et le groupe d'ailes arrière, sur l'axe longitudinal X du véhicule aérien.

Cette disposition permet à la fois de choisir la position longitudinale du centre de gravité vis-à-vis du centre aérodynamique.

Encore plus particulièrement, dans ce cas, chaque aile arrière supporte, en partie arrière selon l'axe longitudinal X, une surface mobile formant gouverne orientable autour d'un axe concourant à l'axe longitudinal X, et perpendiculaire à celui-ci.

Ici encore, la disposition des ailes et des gouvernes permet de rendre lesdites gouvernes nettement plus efficaces.

Avantageusement, le véhicule aérien comporte des moyens de commander le braquage de chacun des gouvernes indépendamment l'une des autres, au moyen d'un actionneur par gouverne, de manière à conserver une capacité de pilotage, même en cas de panne d'un actionneur ou d'une gouverne.

De même, pour permettre de conserver une capacité à piloter le véhicule en cas de panne d'un des moteurs, le véhicule aérien comporte, dans un mode de réalisation particulier, des moyens de commander le fonctionnement des hélices propulsives indépendamment l'une de l'autre

Selon un mode de réalisation particulier, les moyens de fixation sont positionnés sur la partie avant du drone, au droit d'une aile avant, ce qui permet de bénéficier de la forme conique du véhicule pour lui imprimer une inclinaison lors de son attache à la paroi, cette inclinaison étant propice à faciliter le procédé de décollage de ladite paroi.

Dans un autre mode de réalisation, non exclusif du précédent, les moyens de fixation comportent un aimant, par exemple mais non limitativement un électro-aimant, pilotable à distance. Cette disposition permet d'envisager une fixation sur d'autres types de supports.

Selon un mode de réalisation particulier, adapté à réduire le bruit du drone, le véhicule aérien comporte un carénage latéral autour de la zone hébergeant les hélices, ledit carénage prenant la forme d'une bande cylindrique de quelques centimètres de large.

Dans le but de faciliter un atterrissage et un redécollage depuis le sol, le véhicule aérien comporte éventuellement un pied arrière, disposé selon l'axe longitudinal X.

L'invention vise sous un second aspect un procédé de décrochage, selon la revendication 13, d'un véhicule aérien tel qu'exposé, d'une surface inclinée, quelconque, notamment un mur ou une paroi vitrée, à partir d'une position dans laquelle le véhicule est fixé à la paroi, les hélices sont arrêtés, l'actionneur d'extraction est relâché, le procédé comprenant des étapes suivantes :
- mise en rotation des hélices jusqu'à l'équilibre,
- activation de l'actionneur qui exerce une pré-tension sur la ventouse,
- augmentation de la vitesse des hélices qui génèrent alors une portance suffisante pour faire basculer le véhicule autour de la ventouse,
- sous l'effet du basculement, décollement de la ventouse de la paroi.

Ce concept peut être appliqué à un grand nombre de drones capables de vol stationnaire, en y ajoutant un dispositif identique à celui exposé ci-dessus. L'invention vise donc également un kit de transformation, selon la revendication 14, d'un micro-drone à décollage vertical de type télé-opéré, à voilure fixe, ledit micro-drone comportant des moyens de propulsion, le kit comportant des moyens de fixation à un support non horizontal, et des moyens de décrochage de ce support.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
Figures 1 et 2 : des vues en perspective d'un drone conforme à un mode de réalisation de l'invention,
Figures 3 et 4 : des vues de côté d'un drone plaqué contre une paroi verticale et du sens de commande des gouvernes pour éloigner le drone de la paroi,

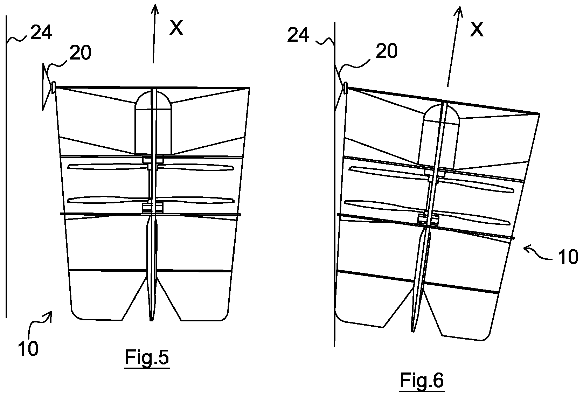

Figures 5 et 6 : des vues de côté d'un drone lors de sa fixation sur une paroi verticale,
Figures 7a à 7d : des vues partielles de côté d'un drone lors de son détachement d'une paroi.

### Description détaillée d'un mode de réalisation de l'invention

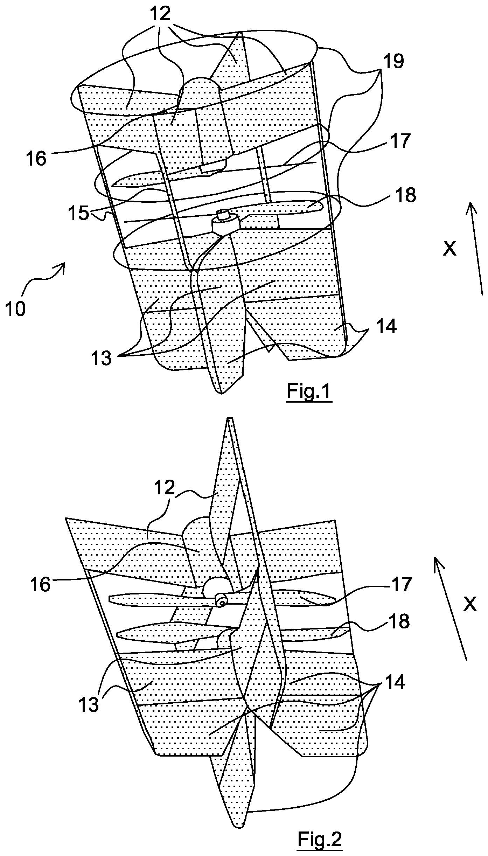

Ainsi qu'on le voit sur les figures 1 et 2, un drone 10 conforme à un mode de réalisation de l'invention est une structure globalement conformée en tronc de cône autour d'un axe longitudinal X, l'angle dudit cône étant de quelques degrés (5 degré dans le présent exemple, mais plus généralement compris entre 2 et 20°).

Le drone 10 comporte en premier lieu une voilure fixe, composée dans le présent exemple nullement limitatif d'un ensemble d'ailes, concourantes selon l'axe longitudinal X. Les termes de "avant", "arrière", "longueur" etc. sont définis par référence à cet axe longitudinal X dans la suite de la description.

Dans le présent exemple, la voilure fixe comprend un premier groupe de quatre ailes avant 12, de forme et dimensions identiques, disposées en croix, ces ailes étant perpendiculaires donc réparties angulairement à 90° les unes des autres autour de l'axe longitudinal X.

Dans des variantes de réalisation, le drone 10 pourrait comprendre trois ailes avant réparties à 120° autour de l'axe longitudinal, ou au contraire plus de quatre ailes avant.

De même, dans le présent exemple, la voilure fixe comprend un second groupe de quatre ailes arrières 13, de forme et dimensions identiques, disposées en croix, ces ailes étant perpendiculaires donc réparties angulairement à 90° les unes des autres autour de l'axe longitudinal X. Chaque aile arrière supporte, en partie arrière, une surface mobile formant gouverne 14 orientable autour d'un axe concourant à l'axe longitudinal, et perpendiculaire à celui-ci dans le présent exemple.

Dans des variantes de réalisation, le drone 10 pourrait comprendre trois ailes arrière réparties à 120° autour de l'axe longitudinal, ou au contraire plus de quatre ailes arrière.

Comme on le voit sur la figure 1, les ailes avant 12 et arrière 13 sont ici coplanaires deux à deux, mais cette disposition n'est pas limitative. De même, le nombre d'ailes avant 12 et arrière 13 est ici égal, sans que cette disposition soit indispensable au bon fonctionnement du drone 10.

Dans le présent exemple, les quatre ailes 12 situées à l'avant, et les quatre ailes situées à l'arrière 13 sont reliés entre elles par des structures légères, ici sous forme de tiges rigides 15.

La répartition de surface entre le groupe d'ailes avant 12 et le groupe d'ailes arrière 13 permet d'ajuster le positionnement longitudinal du centre de gravité du drone 10, de manière à faciliter le contrôle de celui-ci en vol. Le choix des dimensions respectives des ailes avant 12 et arrière 13 est donc réalisé en fonction de la position recherchée pour le centre de gravité, vis-à-vis de la position du foyer aérodynamique du drone 10.

A titre d'exemple sans valeur limitative, les ailes avant 12 présentent chacune une envergure (rayon à partir de l'axe longitudinal) d'un douzaine de centimètre, pour une longueur de six centimètres. De même, les ailes arrière 13 présentent une envergure d'environ 10 centimètre, pour une longueur d'environ huit centimètres. Les gouvernes 14 présentent une longueur (parallèlement à l'axe longitudinal) d'environ cinq centimètres. Dans cet exemple, la longueur totale du drone 10 est d'environ trente centimètres.

Dans le présent exemple, le drone 10 comprend, à l'intersection des ailes avant 12, un logement cylindrique 16 adapté à recevoir une électronique de commande (non détaillée ici car supposée connue de l'homme du métier), des accus d'alimentation ou des capteurs divers, spécifiques à la mission envisagée pour le drone 10.

Le drone 10 comporte en second lieu un groupe de propulsion. Celui-ci comprend ici deux hélices contrarotatives 17, 18, mobiles autour de l'axe longitudinal X, entrainées par deux moteurs électriques coaxiaux, et montées en opposition. L'ensemble comprenant ces deux hélices 17, 18 est disposé entre les deux groupes d'ailes avant 12 et arrière 13, sur l'axe longitudinal X du drone.

Pour optimiser le pilotage, les hélices 17, 18 sont commandées indépendamment l'une de l'autre.

Les hélices 17, 18 sont amovibles, de manière à pouvoir être aisément remplacées entre deux missions du drone 10.

La structure, telle que conçue, permet de maximiser la taille des hélices 17, 18 par rapport au diamètre du drone 10, offrant ainsi un rendement maximum du groupe de propulsion. De cette manière, les hélices ont, à portance égale, une vitesse de rotation minimisée (par rapport à des hélices de faible diamètre), ce qui réduit la vitesse de l'air sous le drone 10.

Le drone 10 comporte également des arceaux externes 19 (ici trois arceaux), disposés de façon à :
- assurer et renforcer l'équerrage des ailes 12, 13;
- protéger les hélices 17, 18, les gouvernes 14, et les systèmes électroniques embarqués, des chocs ou contacts avec des obstacles.

Dans le présent exemple, ces arceaux 19 sont solidarisés soit au bord externe des ailes 12, 13, soit aux tiges rigides 15 reliant lesdites ailes. Ils sont ici réalisés en carbone.

Selon le mode de réalisation décrit ici, des éventuels chocs ou contacts avec des obstacles inhérents à la mission n'altèrent pas l'intégrité du drone 10 (en particulier en ce qui concerne l'efficacité des hélices 17, 18 et des gouvernes 14).

Les éléments formant la structure du drone (ailes 12, 13, gouvernes 14, tiges rigides 15, logement cylindrique 16, hélices 17, 18 etc.) sont réalisés dans des matériaux légers, par exemple polystyrène pour les ailes et les gouvernes, d'une façon connue de l'homme de l'art des micro-drones.

Le braquage de chacune des quatre gouvernes 14 est commandé individuellement au moyen d'un actionneur par gouverne (non illustré sur les figures) pour assurer et faciliter le pilotage du drone 10.

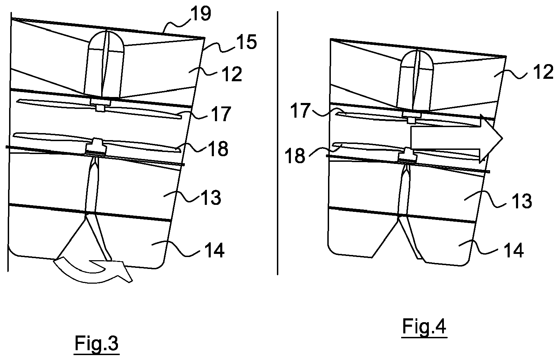

La forme conique du drone, évasée vers le haut, forme un angle d'au minimum 5° avec une paroi verticale (lorsque le drone 10 est en position verticale). Ceci laisse la possibilité aux gouvernes 14 d'agir malgré un contact persistent avec une paroi, et de pouvoir le cas échéant s'en échapper en actionnant lesdites gouvernes 14. Ceci est illustré par les figures 3 et 4.

Le fait que les gouvernes 14 soient actionnées de manière indépendante, comme le sont les deux moteurs électriques entrainant les hélices 17, 18, apporte une redondance en cas de panne de l'un de ces six actionneurs (quatre pour les gouvernes, deux pour les moteurs).

En cas de panne de l'une ou l'autre des quatre gouvernes 14 ou de l'un ou l'autre des deux moteurs, le drone 10 reste contrôlable et peut éventuellement poursuivre et achever sa mission.

La position des hélices 17, 18 par rapport aux ailes 12, 13 permet le recollement des filets d'air sur la totalité des huit ailes 12, 13, prévenant ainsi le drone 10 de tout décrochage intempestif durant les différentes phases de vol.

Le drone 10 comporte également un dispositif de fixation à une paroi, constitué ici d'une ventouse 20, positionnée sur la partie haute (partie avant) du drone, au niveau de l'arceau 19 supérieur, par exemple au droit d'une aile avant 12. Cette ventouse 20 est, dans le présent exemple, amovible, de manière à réduire le poids du drone, lorsque ladite ventouse 20 n'est pas rendue nécessaire par les conditions spécifiques de la mission dudit drone 10.

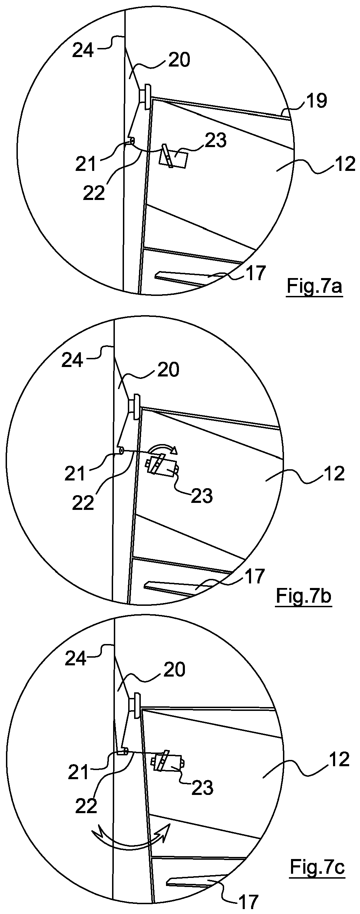

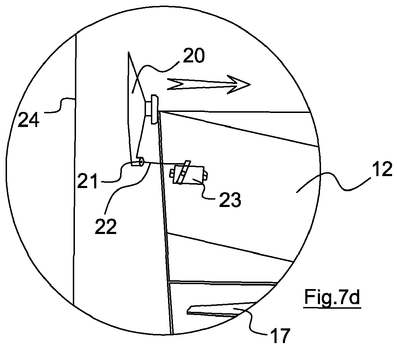

Cette ventouse 20, réalisée en matière plastique, présente ici un diamètre de quelques centimètres. Elle comporte au voisinage de son bord inférieur un ergot 21 permettant l'accrochage d'un fil 22 (voir figures 7 a à 7d).

Un actionneur d'extraction 23, fixé sur l'aile avant 12 en face de cet ergot 21, permet d'exercer une traction sur le fil et de provoquer le décollement de la ventouse 20 de son support. Cet actionneur d'extraction 23 est commandable à distance, comme les actionneurs des gouvernes et des moteurs.

### Mode de fonctionnement

A partir d'une position de repos sur une surface sensiblement horizontale, le drone 10 décolle à la verticale en mettant en oeuvre ses hélices propulsives 17, 18. Il peut ensuite être piloté dans toutes les directions, y compris se placer en vol horizontal, par orientation de ses gouvernes 14.

La fixation de la ventouse 20 sur une paroi lisse 24, par exemple verticale, ici de type vitrée, est obtenue en venant heurter la paroi avec la ventouse 20. La visée correcte se fait à vue directe ou au travers d'une caméra embarquée (non illustrée sur les figures, mais par exemple installée dans le logement cylindrique 16).

Dans une variante de réalisation, le flux vidéo émis par une caméra observant la paroi 24 permet à l'opérateur d'estimer la vitesse d'approche de cette paroi, et donc de freiner le mouvement latéral du drone 10 avant de toucher ladite paroi, sans toutefois chercher une vitesse nulle. En effet, une vitesse résiduelle de quelques dizaines de centimètres par seconde est nécessaire à la fixation correcte de la ventouse 20 sur la paroi 24.

En ralentissant une des hélices 17, 18 par rapport à l'autre, on provoque la rotation du drone 10 autour de son axe longitudinal, de manière à placer la ventouse 20 face à la paroi 24 visée.

La fixation étant réalisée (figure 7a), les hélices 17, 18 peuvent être coupés. Le drone 10 prend alors appuis sur la paroi 24, ce qui se traduit, du fait de la forme tronconique du drone 10, par une inclinaison de quelques degrés (5° dans le présent exemple) par rapport à l'axe vertical lorsque la paroi 24 est verticale.

Une ou plusieurs caméras embarquées peuvent être orientées soit vers l'intérieur du bâtiment, soit vers l'extérieur de celui-ci, offrant à l'opérateur un point d'observation privilégié et panoramique pendant une très longue durée.

Le décrochement du drone 10 de la paroi 24 est réalisé en soulevant le côté inférieur de la ventouse 20 par commande de l'actionneur 23.

Cette phase de décrochage n'est engagée qu'après que lorsque les hélices 17, 18 sont de nouveau en rotation et que la portance générée est suffisante, ce qui se traduit par une rotation du drone 10 autour de la ventouse 20 tendant à ramener ledit drone 10 à la verticale.

Une pré-tension est alors exercée par l'actionneur 23 sur le côté de la ventouse 20, le décollement final de la ventouse 20 s'effectuant lors du basculement total du drone 10 en position verticale.

Ce procédé est illustré par les figures 7a à 7d, qui montrent le déroulement chronologique de la phase d'extraction :
1/ Le drone 10 est fixé à la paroi 24, les hélices 17, 18 sont arrêtés, l'actionneur d'extraction 23 est relâché (figure 7a).
2/ Les hélices 17, 18 sont remises en rotation et génèrent déjà une portance. L'actionneur 23 est activé, il exerce une pré-tension sur la ventouse 20 (figure 7b).
3/ Les hélices 17, 18 génèrent une portance suffisante pour faire basculer le drone 10 autour de la ventouse 20 (figure 7c).
4/ Sous l'effet du basculement, la ventouse 20 finit spontanément de se décoller de la paroi 24. Le drone 10 n'est plus solidaire de celle-ci, et les hélices 17, 18 sont à un niveau de puissance suffisant pour sustenter le drone (figure 7d).

Ce concept peut être appliqué à un grand nombre de micro-drones à décollage vertical, en ajoutant le système de fixation par ventouse 20 et son actionneur d'extraction 23 à l'extrémité d'une aile pourvu qu'elle soit suffisamment raide. L'invention vise donc également un kit de transformation d'un tel micro-drone en véhicule à capacité de fixation à une paroi.

### Avantages de l'invention

On comprend que le dispositif apporte des avantages significatifs par rapport à l'art antérieur.

Cette invention concerne un micro-véhicule aérien multi-mission. Elle comprend des éléments permettant à un micro-véhicule aérien de se fixer sur une surface, notamment une paroi vitrée, et d'être capable de redécoller depuis cette paroi. De la sorte, une mission de plusieurs heures peut être envisagée, au lieu des quelques minutes à dizaines de minutes usuellement réalisables avec un drone.

Les arceaux de protection 19 permettent de protéger le drone 10 lors de vol près d'un obstacle tel qu'un mur.

La commande séparée des hélices 17, 18 permet de l'orienter autour de son axe longitudinal, et de poursuivre la mission en cas de panne d'un moteur.

De même, une panne d'un actionneur d'une des quatre gouvernes 14 n'empêche pas de contrôler le vol du drone 10, au contraire du cas de drones quadrimoteurs, qui ne peuvent être pilotés si un des moteurs est arrêté.

La forme tronconique du drone 10 permet, en actionnant les gouvernes 14, de générer un mouvement de rotation du drone 10 autour d'un axe perpendiculaire à son axe longitudinal. De la sorte, il est possible de faire redécoller le drone 10 lorsque celui-ci est posé au sol.

Le micro-drone 10, tel que décrit, présente une capacité de vol convertible entre vol horizontal et vol vertical, notamment du fait de la disposition des surfaces portantes (ailes 12, 13) en amont et en aval des hélices 17, 18. La présence de surfaces portantes (ailes avant 12) en amont des hélices 17, 18 augmente significativement l'efficacité des gouvernes 14.

Dans une variante de réalisation, la ventouse 20 est remplacée par un électro-aimant, ce qui permet alors la fixation sur un support métallique (éclairage public par exemple). D'autres types de mode de fixation sont également envisageables. Par exemple, on peut citer un système de fixation utilisant une griffe pour des parois de type plâtre.

Eventuellement ces deux moyens de fixation coexistent sur le drone.

Dans une autre variante de réalisation, le drone 10 comporte un carénage latéral autour de la zone hébergeant les hélices 17, 18, de manière à réduire le bruit généré par celles-ci. Ce carénage peut prendre la forme d'une bande cylindrique de quelques centimètres de large.

Dans encore une autre variante de réalisation, le drone 10 comprend un pied arrière, disposé selon l'axe longitudinal X, de manière à pouvoir venir se poser au sol en position verticale, plus favorable pour un redécollage.

## Revendications

1. Véhicule aérien de type mini- ou micro-drone, de type télé-opéré, à voilure fixe,
le véhicule aérien comportant :
- une voilure fixe comprenant deux groupes d'ailes (12, 13), concourantes selon un axe longitudinal X : un premier groupe d'ailes, dites ailes avant selon l'axe longitudinal X, et un deuxième groupe d'ailes, dites ailes arrières selon l'axe longitudinal X ;
- des gouvernes aérodynamiques mobiles (14) disposées dans la partie arrière du véhicule ;
- des moyens de propulsion (17, 18) comprenant deux hélices contrarotatives (17, 18), mobiles autour de l'axe longitudinal X, entrainées par deux moteurs électriques coaxiaux, les hélices (17, 18) étant montées en opposition, l'ensemble comprenant ces deux hélices (17, 18) étant disposé entre les deux groupes d'ailes avant (12) et arrière (13), sur l'axe longitudinal X du véhicule aérien ;
- des moyens de fixation (20) par plaquage contre une paroi (24) sur laquelle le véhicule ne se maintiendrait pas, sans motorisation, par la seule gravité, et des moyens de décrochage (21, 22, 23) de la paroi (24).

2. Véhicule aérien selon la revendication 1, **caractérisé en ce que** les moyens de fixation par plaquage contre une paroi (24) comprennent une ventouse (20), disposée en périphérie du véhicule aérien.

3. Véhicule aérien selon la revendication 2, **caractérisé en ce que** la ventouse (20) comporte au voisinage de son bord un ergot (21) permettant l'accrochage d'un fil (22), les moyens de décrochage de la paroi (24) non horizontale comprenant un actionneur d'extraction (23) pilotable à distance, fixé sur la structure du drone en face de cet ergot (21), permettant d'exercer une traction sur le fil et de provoquer le décollement de la ventouse (20) de sa paroi (24).

4. Véhicule aérien selon l'une quelconque des revendications 1 à 3, **caractérisé en ce que** le véhicule (10) est une structure conformée en tronc de cône autour de l' axe longitudinal X, l'angle dudit cône étant compris entre 2° et 20°, les gouvernes aérodynamiques mobiles (14) étant disposées dans la partie arrière (la moins large) du véhicule.

5. Véhicule aérien selon l'une quelconque des revendications 1 à 4, **caractérisé en ce que** les ailes avant sont constituées de quatre ailes (12) de forme et dimensions identiques, disposées en croix autour de l'axe longitudinal X, et **en ce que** les ailes arrières sont constituées de quatre ailes (13) de forme et dimensions identiques, disposées en croix autour de l'axe longitudinal X.

6. Véhicule aérien selon l'une quelconque des revendications 1 à 5, **caractérisé en ce que** chaque aile arrière (13) supporte, en partie arrière selon l'axe longitudinal X, une surface mobile formant gouverne (14) orientable autour d'un axe concourant à l'axe longitudinal X, et perpendiculaire à celui-ci.

7. Véhicule aérien selon la revendication 6, **caractérisé en ce qu'**il comporte des moyens de commander le braquage de chacun des gouvernes (14) indépendamment l'une des autres, au moyen d'un actionneur par gouverne

8. Véhicule aérien selon l'une quelconque des revendications 1 à 7, **caractérisé en ce qu'**il comporte des moyens de commander le fonctionnement des hélices propulsives (17, 18) indépendamment l'une de l'autre

9. Véhicule aérien selon l'une quelconque des revendications 1 à 8, **caractérisé en ce que** les moyens de fixation (20) sont positionnés sur la partie avant du drone, au droit d'une aile avant 12.

10. Véhicule aérien selon l'une quelconque des revendications 1 à 9, **caractérisé en ce que** les moyens de fixation (20) comportent un aimant, pilotable à distance.

11. Véhicule aérien selon l'une quelconque des revendications 1 à 10, **caractérisé en ce qu'**il comporte un carénage latéral autour de la zone hébergeant les hélices (17, 18), ledit carénage prenant la forme d'une bande cylindrique de quelques centimètres de large.

12. Véhicule aérien selon l'une quelconque des revendications 1 à 11, **caractérisé en ce qu'**il comporte un pied arrière, disposé selon l'axe longitudinal X.

13. Procédé de décrochage d'un véhicule aérien (10) selon la revendication 3, d'une surface inclinée, quelconque, notamment un mur ou une paroi vitrée, à partir d'une position dans laquelle le véhicule (10) est fixé à la paroi (24), les hélices (17, 18) sont arrêtés, l'actionneur d'extraction (23) est relâché, le procédé comprenant des étapes suivantes :
- mise en rotation des hélices (17, 18),
- activation de l'actionneur (23) qui exerce une pré-tension sur la ventouse (20),
- augmentation de la vitesse des hélices (17, 18) qui génèrent alors une portance suffisante pour faire basculer le véhicule (10) autour de la ventouse (20),
- sous l'effet du basculement, décollement de la ventouse (20) de la paroi (24).

14. Kit de transformation d'un micro-drone (10) à décollage vertical de type télé-opéré, à voilure fixe, ledit micro-drone (10) comportant des moyens de propulsion (17, 18),
**caractérisé en ce que** le kit comporte des moyens de fixation (20) par ventouse à disposer à l'extrémité d'une aile et son actionneur d'extraction (23), la ventouse comportant au voisinage de son bord un ergot (21) permettant l'accrochage d'un fil (22), les moyens de décrochage de la paroi (24) non horizontale comprenant l' actionneur d'extraction (23) pilotable à distance, fixable sur la structure du drone en face de cet ergot (21), permettant d'exercer une traction sur le fil et de provoquer le décollement de la ventouse (20) de sa paroi (24).

## Patentansprüche

1. Luftfahrzeug vom Typ Mini- oder Mikro-Drohne ferngesteuerten Typs mit starren Flügeln, wobei das Luftfahrzeug umfasst:
- starre Flügel, umfassend zwei Flügelgruppen (12, 13), die entlang einer Längsachse X zusammenlaufen: eine erste Flügelgruppe, vordere Flügel genannt, entlang der Längsachse X und eine zweite Flügelgruppe, hintere Flügel genannt, entlang der Längsachse X;
- mobile aerodynamische Steuerruder (14), die im hinteren Teil des Luftfahrzeugs angeordnet sind;
- Antriebsmittel (17, 18), umfassend zwei gegenläufige Schrauben (17, 18), die um die Längsachse X mobil sind, die von zwei koaxialen Elektromotoren angetrieben werden, wobei die Schrauben (17, 18) entgegengesetzt montiert sind, wobei die Gesamtheit, umfassend diese zwei Schrauben (17, 18), zwischen den zwei vorderen (12) und hinteren (13) Flügelgruppen auf der Längsachse X des Luftfahrzeugs angeordnet ist;
- Befestigungsmittel (20) durch Drücken gegen eine Wand (24), an der sich das Luftfahrzeug nicht halten würde, ohne Motorisierung, nur durch Schwerkraft, und Mittel (21, 22, 23) zum Lösen von der Wand (24).

2. Luftfahrzeug nach Anspruch 1, **dadurch gekennzeichnet, dass** die Befestigungsmittel durch Drücken gegen eine Wand (24) einen Sauger (20) umfassen, der an der Peripherie des Luftfahrzeugs angeordnet ist.

3. Luftfahrzeug nach Anspruch 2, **dadurch gekennzeichnet, dass** der Sauger (20) in der Nähe seines Randes einen Haken (21) umfasst, der die Befestigung eines Drahtes (22) ermöglicht, wobei die Mittel zum Lösen von der nicht horizontalen Wand (24) einen fernsteuerbaren Entnahmeaktuator (23) umfassen, der auf der Struktur der Drohne gegenüber diesem Haken (21) befestigt ist und es ermöglicht, einen Zug auf den Draht auszuüben und das Ablösen des Saugers (20) von seiner Wand (24) hervorzurufen.

4. Luftfahrzeug nach einem der Ansprüche 1 bis 3, **dadurch gekennzeichnet, dass** das Luftfahrzeug (10) eine als Kegelstumpf ausgebildete Struktur um die Längsachse X ist, wobei der Winkel des Kegels zwischen 2° und 20° beträgt, wobei die mobilen aerodynamischen Steuerruder (14) im hinteren (am wenigsten breiten) Teil des Luftfahrzeugs angeordnet sind.

5. Luftfahrzeug nach einem der Ansprüche 1 bis 4, **dadurch gekennzeichnet, dass** die vorderen Flügel von vier Flügeln (12) von identischer Form und Dimension gebildet sind, die kreuzweise um die Längsachse X angeordnet sind, und dass die hinteren Flügel von vier Flügeln (13) von identischer Form und Dimension gebildet sind, die kreuzweise um die Längsachse X angeordnet sind.

6. Luftfahrzeug nach einem der Ansprüche 1 bis 5, **dadurch gekennzeichnet, dass** jeder hintere Flügel (13) im hinteren Teil entlang der Längsachse X eine mobile Fläche trägt, die ein Steuerruder (14) bildet, das um eine zur Längsachse X zulaufende Achse ausrichtbar und zu dieser senkrecht ist.

7. Luftfahrzeug nach Anspruch 6, **dadurch gekennzeichnet, dass** es Mittel umfasst, um den Lenkwinkel jedes der Steuerruder (14) unabhängig voneinander mit Hilfe eines Aktuators pro Steuerruder zu steuern.

8. Luftfahrzeug nach einem der Ansprüche 1 bis 7, **dadurch gekennzeichnet, dass** es Mittel umfasst, um die Funktion der Antriebsschrauben (17, 18) unabhängig voneinander zu steuern.

9. Luftfahrzeug nach einem der Ansprüche 1 bis 8, **dadurch gekennzeichnet, dass** die Befestigungsmittel (20) auf dem vorderen Teil der Drohne im rechten Winkel zu einem vorderen Flügel 12 angeordnet sind.

10. Luftfahrzeug nach einem der Ansprüche 1 bis 9, **dadurch gekennzeichnet, dass** die Befestigungsmittel (20) einen fernsteuerbaren Magneten umfassen.

11. Luftfahrzeug nach einem der Ansprüche 1 bis 10, **dadurch gekennzeichnet, dass** es eine seitliche Verkleidung um die Zone, in der sich die Schrauben (17, 18) befinden, umfasst, wobei die Verkleidung die Form eines zylindrischen Bandes von einigen Zentimetern Breite annimmt.

12. Luftfahrzeug nach einem der Ansprüche 1 bis 11, **dadurch gekennzeichnet, dass** es einen hinteren Fuß umfasst, der entlang der Längsachse X angeordnet ist.

13. Verfahren zum Ablösen eines Luftfahrzeugs (10) nach Anspruch 3 von einer beliebigen geneigten Fläche, insbesondere einer Mauer oder einer Glaswand, aus einer Position, in der das Luftfahrzeug (10) an der Wand (24) befestigt ist, wobei die Schrauben (17, 18) angehalten sind, der Entnahmeaktuator (23) losgelassen ist, wobei das Verfahren die folgenden Schritte umfasst:
- Versetzen der Schrauben (17, 18) in Drehung,
- Aktivieren des Aktuators (23), der eine Vorspannung auf den Sauger (20) ausübt,
- Erhöhung der Geschwindigkeit der Schrauben (17, 18), die nun eine ausreichende Tragfähigkeit erzeugen, um das Luftfahrzeug (10) um den Sauger (20) zum Schwenken zu bringen,
- unter der Wirkung des Schwenkens Ablösen des Saugers (20) von der Wand (24).

14. Umbausatz einer senkrechtstartenden Mikro-Drohne (10) ferngesteuerten Typs mit starren Flügeln, wobei die Mikro-Drohne (10) Antriebsmittel (17, 18) umfasst,
**dadurch gekennzeichnet, dass** der Bausatz Befestigungsmittel (20) durch einen Sauger, der am Ende eines Flügels anzuordnen ist, und seinen Entnahmeaktuator (23) umfasst, wobei der Sauger in der Nähe seines Randes einen Haken (21) umfasst, der die Befestigung eines Drahtes (22) ermöglicht, wobei die Mittel zum Ablösen von der nicht horizontalen Wand (24) einen fernsteuerbaren Entnahmeaktuator (23) umfassen, der auf der Struktur der Drohne gegenüber diesem Haken (21) befestigbar ist, der es ermöglicht, einen Zug auf den Draht auszuüben und das Ablösen des Saugers (20) von seiner Wand (24) hervorzurufen.

## Claims

1. Airborne vehicle of mini- or micro-drone type, of remotely operated type, with fixed wing,
the airborne vehicle has:
- a fixed wing comprising two groups of wings (12,13), concurring with a longitudinal axis X: a first group of wings, called front wings according to the longitudinal axis X, and a second group of wings, called rear wings according to the longitudinal axis X;
- mobile aerodynamic control surfaces (14) arranged in the rear part of the vehicle;
- means of propulsion (17,18) comprising two contrarotating propellers (17,18), which are mobile around the longitudinal axis X, driven by two coaxial electric engines, the propellers (17,18) being installed in opposition, the whole including these two propellers (17,18) being located between the two groups of front (12) and rear wings (13), on the longitudinal axis X of the airborne vehicle;
- means of attachment (20) by plating against a wall (24) on which the vehicle would not be held, without motorization, by gravity alone, and means of detachment (21,22,23) from the wall (24).

2. Airborne vehicle according to claim 1, **characterized in that** the means of attachment by plating against a wall (24) comprises a suction cup (20), arranged on the periphery of the airborne vehicle.

3. Airborne vehicle according to claim 2, **characterized in that** the suction cup (20) comprises a hook (21) next to its edge which allows the attachment of a wire (22), the means of detachment from the non-horizontal wall (24) comprising a remotely controllable extraction actuator (23), fixed to the structure of the drone in front of this hook (21), which allows pulling on the wire and causing the suction cup (20) to detach from its wall (24).

4. Airborne vehicle according to any one of claims 1 to 3, **characterized in that** the vehicle (10) is a shaped cone trunk structure around the longitudinal axis X, the angle of said cone being between 2° and 20°, the mobile aerodynamic control surfaces (14) being arranged in the rear part (less wide) of the vehicle.

5. Airborne vehicle according to any one of claims 1 to 4, **characterized in that** the front wings are made up of four wings (12) of identical shape and dimensions, arranged in a cross pattern around the longitudinal axis X, and **in that** the rear wings are made up of four wings (13) of identical shape and dimensions, arranged in a cross pattern around the longitudinal axis X.

6. Airborne vehicle according to any one of claims 1 to 5, **characterized in that** each rear wing (13) supports, in part aft along the longitudinal axis X, a mobile surface forming control surface (14) which can be swiveled around an axis that is concurring to the longitudinal axis X and perpendicular to it.

7. Airborne vehicle according to claim 6, **characterized in that** it comprises means for controlling the steering of each of the control surfaces (14) independently of one another, by means of an actuator per control surface.

8. Airborne vehicle according to any one of claims 1 to 7, **characterized in that** it comprises means for controlling the operations of the propulsive propellers (17, 18), independently of each other.

9. Airborne vehicle according to any one of claims 1 to 8, **characterized in that** the means of attachment (20) are located on the front part of the drone, to the right of the front wing 12.

10. Airborne vehicle according to any one of claims 1 to 9, **characterized in that** the means of attachment (20) comprises a magnet, remotely controllable.

11. Airborne vehicle according to any one of claims 1 to 10, **characterized in that** it comprises a side fairing around the zone that houses the propellers (17, 18), said fairing taking the form of a cylindrical strip a few centimeters wide.

12. Airborne vehicle according to any one of claims 1 to 11, **characterized in that** it comprises a rear foot, arranged along the longitudinal axis X.

13. Method for detaching an airborne vehicle (10) according to claim 3, of any inclined surface, in particular a wall or a glass wall, from a position in which the vehicle (10) is attached to the wall (24), the propellers (17, 18) are stopped, the extraction actuator (23) is released, the method comprises the following steps:
- putting the propellers into rotation (17, 18),
- activation of the actuator (23) which exercises pre-tension on the suction cup (20),
- increasing the speed of the propellers (17, 18), which then generate sufficient lift to tip the vehicle (10) around the suction cup (20),
- as a result of the tipping, detachment of the suction cup (20) from the wall (24).

14. Transformation kit for micro-drone (10) with vertical take-off of the remotely operated type, with fixed wing, said micro-drone (10) having propulsion means (17, 18),
**characterized in that** the kit comprises means of attachment (20) by suction cup to be disposed at the end of a wing and its extraction actuator (23), the suction cup having in the vicinity of its edge a hook (21) for attaching a wire (22), the means of detachment from a non-horizontal wall (24) comprising the remotely controllable extraction actuator (23), fixable to the structure of the drone in front of the hook (21), allowing pulling on the wire and causing the suction cup to be detached (20) from its wall (24).
